# DEMANDE DE BREVET EUROPEEN

(11) **EP 2 096 305 A1**
(43) Date de publication de la demande: **02.09.2009**
(21) Numéro de dépôt: 09153666.4
(22) Date de dépôt: 25.02.2009
(51) Int. Cl.: F03G 6/00, F01K 3/00, F24J 2/24, F28D 1/04

(54) **Installation de génération d'énergie électrique à partir d'énergie solaire**

(30) Priorité: 27.02.2008 FR 0851261
(71) Demandeur: Sophia Antipolis Energie Developpement, 06560 Valbonne (FR)
(72) Inventeur: Wohrer, Michel, 92200 Neuilly sur Seine (FR); Laffitte, Pierre, 06570 Saint Paul (FR); Lenotre, Christian, 06620 Le bar sur loup (FR)
(74) Mandataire: Blot, Philippe Robert Emile

(57) **Abrégé**

Cette installation de génération d'énergie électrique à partir d'énergie solaire du type comportant :
- une source chaude (2),
- une source froide (4),
- une machine thermique (5) de production d'électricité, utilisant la source chaude (2) et la source froide (4) ;
ladite source chaude (2) comprenant :
- des moyens de chauffage (6) d'un premier fluide (8) caloporteur à partir d'énergie solaire,
- des moyens de stockage (10) d'énergie thermique,
- un premier circuit (12) de transport du premier fluide (8) caloporteur reliant les moyens de chauffage (6), les moyens de stockage (10) et la machine thermique (5) de production d'électricité ;

ladite source froide (4) comprenant un deuxième circuit (46) de transport d'un deuxième fluide (48) caloporteur ;
est **caractérisée en ce que** lesdits moyens de stockage (10) utilisent la chaleur latente de fusion d'un matériau à changement d'état (18).

## Description

La présente invention concerne une installation de génération d'énergie électrique à partir d'énergie solaire du type comportant :
- une source chaude,
- une source froide,
- une machine thermique de production d'électricité, utilisant la source chaude et la source froide ; ladite source chaude comprenant :

- des moyens de chauffage d'un premier fluide caloporteur à partir d'énergie solaire,
- des moyens de stockage d'énergie thermique,
- un premier circuit de transport du premier fluide caloporteur reliant les moyens de chauffage, les moyens de stockage et la machine thermique de production d'électricité ; ladite source froide comprenant un deuxième circuit de transport d'un deuxième fluide caloporteur.

Le document FR 2 874 975 A1 décrit un dispositif de production d'électricité solaire basse température. Ce dispositif utilise des capteurs solaires pour obtenir de l'eau chaude le jour et des dissipateurs thermiques pour obtenir de l'eau froide la nuit. L'eau chaude est stockée dans un réservoir pour avoir en permanence une source chaude qui sert à la production d'électricité en utilisant une turbine dans un cycle de Rankine, couplée à un alternateur.

Toutefois, l'eau, en chaleur sensible, ne permet pas d'avoir une température de stockage sensiblement constante et la densité de stockage d'énergie calorique chaude n'est pas optimale.

L'invention a donc pour but d'augmenter la densité de stockage d'énergie calorique chaude, à une température sensiblement constante, afin d'optimiser le fonctionnement de l'installation de génération d'énergie électrique.

A cet effet, l'invention a pour objet une installation de génération d'énergie électrique à partir d'énergie solaire du type précité, caractérisée en ce que lesdits moyens de stockage utilisent la chaleur latente de fusion d'un matériau à changement d'état.

Suivant d'autres modes de réalisation, l'installation de génération d'énergie électrique comprend une ou plusieurs des caractéristiques suivantes, prises isolément ou suivant toutes les combinaisons techniquement possibles :
- les moyens de stockage comportent une cuve et une pluralité de capsules étanches disposées dans la cuve, ledit premier fluide caloporteur circulant dans la cuve entre les capsules étanches, lesdites capsules étanches comprenant le matériau à changement d'état,
- la température de fusion du matériau à changement d'état est comprise entre 100° Celsius et 130° Celsius,
- le matériau à changement d'état est un matériau organique,
- le matériau organique est un polyéthylène du type Polywax 2000^{™} de température de fusion voisine de 112° Celsius à 120° Celsius,
- le matériau à changement d'état est un matériau minéral,
- le matériau minéral est le chlorure de magnésium hexahydraté de température de fusion voisine de 116° Celsius,
- la source chaude comprend une boucle de régulation et l'installation comporte des moyens de commande à distance de ladite boucle de régulation,
- la source chaude comprend une bâche de stockage pour délester le premier circuit de transport du premier fluide caloporteur,
- la source chaude comprend un générateur d'énergie thermique, afin de garantir une production d'électricité permanente, dans le cas où les moyens de stockage sont vides et l'énergie solaire insuffisante,
- la source chaude comprend un récupérateur d'énergie thermique, afin de garantir une production d'électricité permanente, dans le cas où les moyens de stockage sont vides et l'énergie solaire insuffisante,
- les moyens de chauffage comportent des capteurs solaires à tubes sous vide, de température d'utilisation notamment comprise entre 80° Celsius et 150° Celsius,
- la température maximale du premier fluide caloporteur est égale à 150° Celsius,
- la pression maximale dans le premier circuit de transport est égale à 6 bars,
- le premier circuit de transport comprend deux sous-circuits indépendants, le premier sous-circuit reliant les moyens de chauffage aux moyens de stockage, le deuxième sous-circuit reliant les moyens de stockage à la machine thermique de production d'électricité,
- la machine thermique comprend :

- un troisième circuit de transport d'un fluide de service,
- une chaudière pour faire passer le fluide de service de l'état liquide à l'état gazeux, à partir de la source chaude,
- une turbine, fonctionnant à partir du fluide de service à l'état gazeux, couplée à une génératrice d'électricité,
- un condenseur, pour faire passer ledit fluide de service de l'état gazeux à l'état liquide, à partir de la source froide, et la température maximale du fluide de service dans la turbine est égale à 100° Celsius,
- le fluide de service est un fluide organique, notamment le butane.

L'invention et ses avantages seront mieux compris à la lecture de la description qui va suivre, donnée uniquement à titre d'exemple et faite en référence aux dessins annexés, sur lesquels :
- la figure 1 est une représentation schématique de l'installation selon l'invention, et
- la figure 2 est une vue analogue à la figure 1, de l'installation selon un autre mode de réalisation de l'invention.

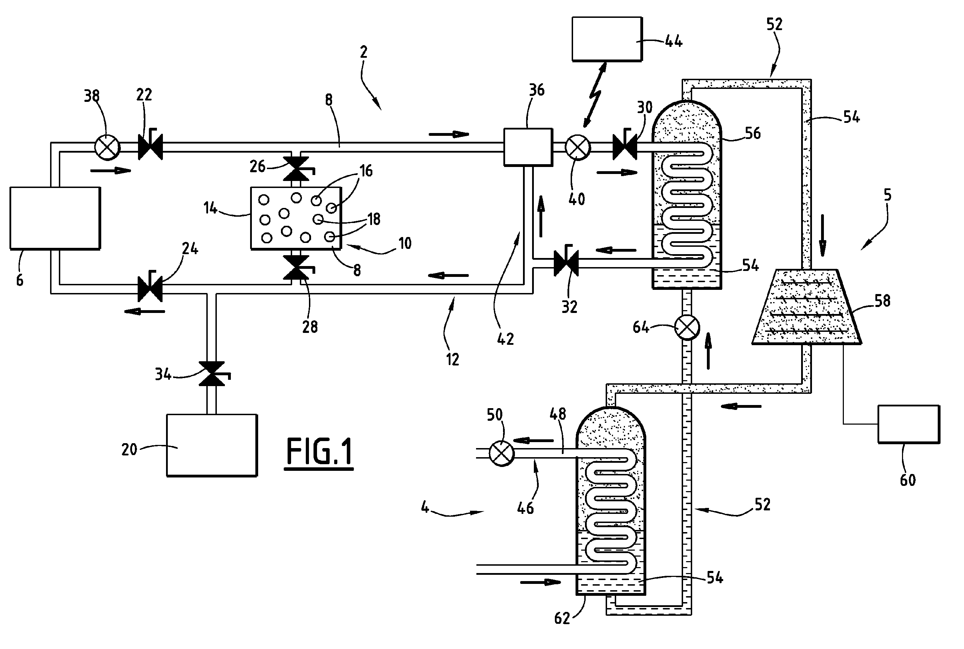

Sur la figure 1, une installation de génération d'énergie électrique à partir d'énergie solaire comporte une source chaude 2, une source froide 4 et une machine thermique 5 de production d'électricité.

La source chaude 2 comprend des moyens de chauffage 6 par énergie solaire d'un premier fluide 8 caloporteur, des moyens de stockage 10 de l'énergie thermique et un premier circuit 12 de transport du premier fluide 8 caloporteur.

Le premier circuit 12 relie les moyens de chauffage 6, les moyens de stockage 10 et la machine thermique 5 de production d'électricité. Le premier fluide 8 est de l'eau.

Les moyens de chauffage 6 comportent une pluralité de capteurs solaires à tubes sous vide, non représentés.

Chaque capteur à tubes sous vide comprend un réflecteur et deux tubes de verre concentriques, fermés en demi-cercle à une extrémité et scellés hermétiquement l'un à l'autre, à l'autre extrémité.

Les deux tubes de verre concentriques sont séparés par du vide. La surface extérieure du tube intérieur est recouverte d'un revêtement absorbant le rayonnement solaire. Le revêtement est, par exemple, réalisé en nitrite d'aluminium pulvérisé.

Dans chaque tube intérieur se trouve un tuyau en forme de « U » transportant le premier fluide 8 caloporteur et raccordé au premier circuit 12.

La température d'utilisation des capteurs solaires à tube sous vide est comprise entre 80° Celsius et 150° Celsius.

Les moyens de stockage 10 comportent une cuve 14 et une pluralité de capsules 16 étanches disposées dans la cuve 14. Un matériau 18 à changement d'état, également appelé matériau à changement de phase (MCP), et disposé dans les capsules 16 étanches et le premier fluide 8 caloporteur circule dans la cuve 14 autour des capsules 16.

La température de fusion du matériau 18 à changement d'état est comprise entre 100° Celsius et 130° Celsius. Le matériau à changement d'état est par exemple un matériau organique tel qu'un polyéthylène du type Polywax 2000^{™} de température de fusion voisine de 112° Celsius à 120° Celsius, ou un matériau minéral tel que le chlorure de magnésium hexahydraté (MgCl₂, 6 H2O) de température de fusion voisine de 116° Celsius.

Le matériau à changement d'état sera choisi en fonction de son respect pour l'environnement (recyclabilité, analyse du cycle de vie, etc...).

L'utilisation d'un tel matériau à changement d'état pour une installation de génération d'énergie électrique d'une puissance sensiblement égale à 1 MW permettra d'assurer différents scénarii, et selon ces derniers, les énergies stockées seront comprises entre 5 MWh et 100 MWh.

La source chaude 2 comprend une bâche de stockage 20 pour délester le premier circuit 12 de transport du premier fluide 8 caloporteur.

Le premier circuit 12 comporte plusieurs vannes 22, 24, 26, 28, 30, 32, 34 et un mélangeur 36. L'ensemble de la circulation du premier fluide 8 dans le premier circuit 12 est assuré par deux pompes 38, 40.

Dans le premier circuit 12, le premier fluide 8 caloporteur est à une température maximale de 150° Celsius et sous une pression maximale de 6 bars.

Les moyens de stockage 10 et le premier circuit 12 sont calorifugés par un isolant, non représenté.

La source chaude 2 comprend une boucle de régulation 42, comportant un mélangeur 36 et la pompe 40. L'installation comporte des moyens de commande à distance 44 de la boucle 42.

La source froide 4 comprend un deuxième circuit 46 de transport d'un deuxième fluide 48 caloporteur. La circulation du deuxième fluide 48 dans le deuxième circuit 46 est assurée par une pompe 50. Le deuxième fluide 46 est de l'eau, prélevée par exemple d'une rivière ou de la mer, et rejetée respectivement dans la rivière ou dans la mer.

La machine thermique 5 comprend un troisième circuit 52 de transport d'un fluide de service 54, une chaudière 56, une turbine 58, couplée à une génératrice d'électricité 60, et un condenseur 62.

La circulation du fluide de service 54 dans le troisième circuit 52 est assurée par une pompe 64. Le fluide de service 54 est un fluide organique, tel que le butane ou le propane, de préférence le butane. La température d'ébullition du fluide de service 54 est sensiblement basse et proche de 80°Celsius pour une pression de 9,6 bars.

La chaudière 56 est destinée à faire passer le fluide de service 54 de l'état liquide à l'état gazeux, à partir de la source chaude 2. Le premier circuit 12 de la source chaude est en forme de serpentin à l'intérieur de la chaudière 56, ledit serpentin étant au contact du fluide de service 54. Le fluide de service 54 est sous une pression d'environ 11 bars dans la chaudière 56. En sortie de la chaudière 56, le fluide de service 54 est à l'état gazeux, à une température d'environ 85° Celsius et sous une pression d'environ 11 bars.

La turbine 58 comporte, de manière classique, un rotor comprenant un arbre sur lequel sont fixées des aubes, et un stator comprenant un carter portant des déflecteurs fixes. En sortie de turbine 58, le fluide de service 54 est à l'état gazeux, à une température d'environ 40° Celsius sous une pression comprise entre 2 et 3 bars. La turbine 58 est destinée à convertir l'énergie issue de la détente du fluide de service 54 à l'état gazeux en énergie mécanique.

La génératrice d'électricité 60 transforme l'énergie mécanique reçue de la turbine 58 en énergie électrique.

Le condenseur 62 est destiné à faire passer le fluide de service 54 de l'état gazeux à l'état liquide, à partir de la source froide 4. Le troisième circuit 46 de la source froide est en forme de serpentin à l'intérieur du condenseur 62, ledit serpentin étant au contact du fluide de service 54. En sortie de condenseur 62, le fluide de service 54 est à l'état liquide.

Le fonctionnement de l'installation de génération d'énergie électrique va maintenant être décrit à l'aide de la figure 1.

L'installation de génération d'énergie électrique est dite à basse température, compte tenu de la température maximale de la source chaude égale à 150° Celsius qui est nettement inférieure à celle utilisée dans d'autres centrales solaires thermiques, telles que les centrales à capteur cylindro-parabolique, les centrales à tour, les centrales à capteur parabolique, où la température du fluide caloporteur circulant dans la source chaude est supérieure à 400° Celsius.

Les capteurs solaires des moyens de chauffage 6 captent durant la journée le rayonnement solaire et l'énergie solaire est transmise au premier fluide 8 caloporteur sous forme d'énergie thermique. Les moyens de stockage 10 servent de tampon entre l'énergie thermique produite par les moyens de chauffage 6 et celle consommée par la machine thermique 5 de production d'électricité. Les moyens de chauffage 10 permettent donc de découpler la production d'électricité de la disponibilité solaire.

Plusieurs modes de fonctionnement sont envisageables au niveau de la source chaude 2, à l'aide des vannes 22 à 32, du mélangeur 36 et des pompes 38 et 40 : le stockage seul d'énergie thermique, la production directe d'énergie thermique, le stockage et la production d'énergie thermique, le déstockage d'énergie thermique et la production directe d'énergie thermique, et le déstockage seul d'énergie thermique.

Pour le stockage seul d'énergie thermique, les vannes 22 à 28 sont ouvertes et l'arrivée d'eau en provenance de la pompe 38 est coupée au niveau du mélangeur 36, la pompe 40 ne fonctionnant pas.

Pour la production directe d'énergie thermique, les vannes 22, 24, 30, 32 sont ouvertes et les vannes 26 et 28 sont fermées. Les moyens de commande 44 agissant à distance sur la boucle de régulation 42, notamment par l'intermédiaire du mélangeur 36 et de la pompe 40. En fonction de la régulation, le débit de la pompe 40 est sensiblement égal ou bien supérieur au débit de la pompe 38.

Pour le stockage et la production d'énergie thermique, les vannes 22 à 32 sont ouvertes et le débit de la pompe 38 est supérieur au débit de la pompe 40.

Pour le déstockage d'énergie thermique et la production d'énergie thermique, toutes les vannes 22 à 32 sont ouvertes et le débit de la pompe 40 est supérieur au débit de la pompe 38.

Pour le déstockage seul d'énergie thermique, les vannes 22, 24 sont fermées et les vannes 26 à 32 sont ouvertes. Dans ce cas, la pompe 38 ne fonctionne pas.

Il est à noter que la vanne 34 peut être ouverte si nécessaire pour délester le premier circuit 12 d'eau 8 dans la bâche 20, notamment dans le cas où la température de l'eau 8 est trop élevée.

Les moyens de stockage 10 utilisent la chaleur latente de fusion du matériau 18 à changement d'état. L'eau 8 circule en effet entre les capsules 16 étanches en leur transmettant de la chaleur, afin de faire passer progressivement le matériau 18 de l'état solide à l'état liquide, lorsque la température de l'eau 8 est sensiblement supérieure à la température de fusion du matériau 18. Le matériau 18 est choisi en adéquation avec la température maximale admise par la source chaude 2. La température de fusion du matériau 18 à changement de phase, comprise entre 100° Celsius et 130° Celsius, est ainsi sensiblement inférieure à la température maximale du premier fluide 8 caloporteur, à savoir 150° Celsius.

Lorsque la température de l'eau 8 diminue et devient inférieure à la température de solidification du matériau 18 à changement de phase, le matériau 18 repasse progressivement de l'état liquide à l'état solide. La solidification du matériau 18 libère de la chaleur, ce qui correspond au déstockage d'énergie thermique.

La boucle de régulation 42 permet d'adapter la quantité d'énergie thermique fournie par la source chaude 2 à la machine thermique 5 de production d'électricité.

De par la chaleur apportée par la source chaude 2, le fluide de service 54 passe de l'état liquide à l'état gazeux dans la chaudière 56. Le fluide de service 54 arrive ainsi à l'état gazeux et sous une pression de 11 bars à l'entrée de la turbine 58. Le fluide de service à l'état gazeux se détend alors dans la turbine 58 et fournit de l'énergie mécanique, en entraînant le rotor de la turbine en rotation. Cette énergie mécanique est transmise à la génératrice 60, afin de produire de l'électricité. En sortie de la turbine 58, le fluide de service 54 est toujours à l'état gazeux, mais sous une pression nettement inférieure.

Le fluide de service 54 repasse alors à l'état liquide dans le condenseur 62 au contact de la source froide 4. En sortie du condenseur 62, le fluide de service 54 à l'état liquide est alors entraîné par la pompe 64 pour retourner à l'entrée de la chaudière 56 et exploiter de nouveau la chaleur fournie par la source 2.

Ainsi, le stockage d'énergie thermique au niveau de la source chaude 2 permet de lisser les variations climatiques aléatoires et d'optimiser le fonctionnement de l'installation de génération d'énergie électrique.

En outre, le stockage d'énergie thermique utilisant la chaleur latente de fusion d'un matériau à changement d'état a l'avantage, par rapport à un stockage d'énergie thermique utilisant la chaleur sensible, d'assurer une forte densité de stockage et une température sensiblement constante.

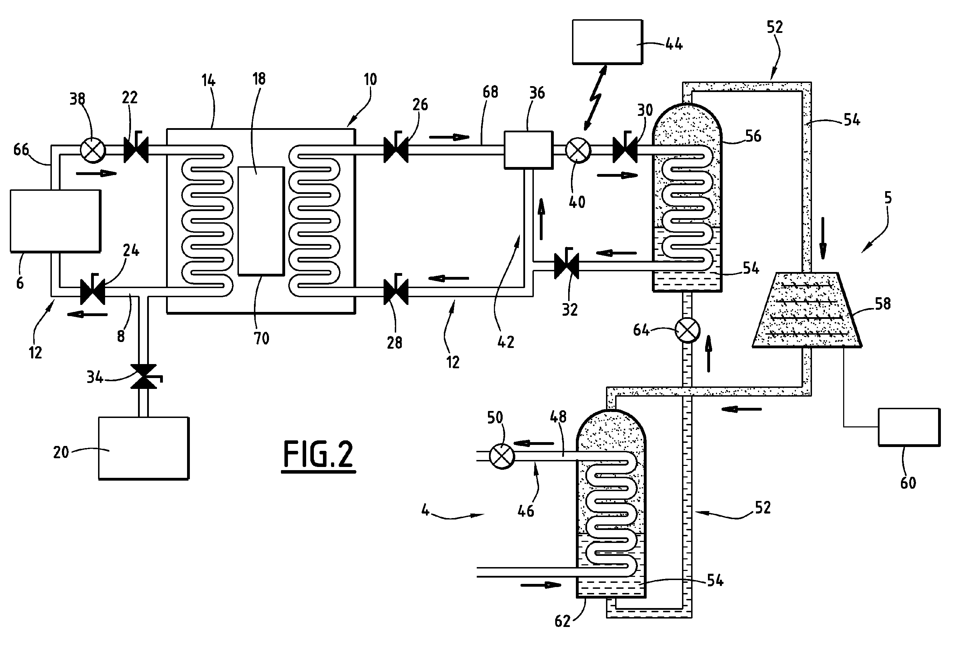

La figure 2 illustre un autre mode de réalisation, pour lequel les éléments analogues au mode de réalisation décrit précédemment sont repérés par des références identiques.

Le premier circuit 12 de la source chaude 2 comprend deux sous-circuits 66, 68 indépendants.

Le premier sous-circuit 66 relie les moyens de chauffage 6 aux moyens de stockage 10 et le deuxième sous-circuit 68 relie les moyens de chauffage 10 à la machine thermique 5 de production d'électricité.

Le matériau 18 à changement de phase est stocké dans une cuve 70, entourée par les sous-circuits 66, 68 en forme de serpentins. La cuve 70 et les serpentins des sous-circuits 66, 68 sont disposés à l'intérieur de la cuve 14. La cuve 14 et les sous-circuits 66, 68 sont calorifugés avec un isolant non représenté.

Le fonctionnement de ce deuxième mode de réalisation est sensiblement identique à celui du premier mode de réalisation, décrit précédemment à l'aide de la figure 1. Seules les différences de fonctionnement par rapport au premier mode de réalisation sont décrites, par la suite, à l'aide de la figure 2.

La source chaude 2 propose deux modes de fonctionnement, réalisés de manière simultanée ou bien successive : le stockage d'énergie thermique et le déstockage d'énergie thermique.

Pour le stockage d'énergie thermique, les vannes 22 et 24 sont ouvertes et la pompe 38 fait circuler l'eau 8 dans le premier sous-circuit 66.

Pour le déstockage d'énergie thermique, les vannes 26, 28, 30, 32 sont ouvertes et la circulation de l'eau 8 est assurée par la pompe 40 dans le deuxième sous-circuit 68. En outre, les moyens de commande 40 agissent sur la boucle de régulation 42.

Le fonctionnement de la machine thermique 5 de production d'électricité dans ce deuxième mode de réalisation est identique à celui décrit dans le premier mode de réalisation et n'est donc pas décrit à nouveau.

En variante, le fluide de service 54 est du propane.

En complément, la source chaude 2 peut comprendre également un générateur ou un récupérateur d'énergie thermique à 100° Celsius, afin de garantir une production d'électricité permanente, notamment dans le cas où les moyens de stockage 10 sont vides et l'énergie solaire insuffisante, par exemple la nuit.

## Revendications

1. Installation de génération d'énergie électrique à partir d'énergie solaire du type comportant :
- une source chaude (2),
- une source froide (4),
- une machine thermique (5) de production d'électricité, utilisant la source chaude (2) et la source froide (4) ; ladite source chaude (2) comprenant :
- des moyens de chauffage (6) d'un premier fluide (8) caloporteur à partir d'énergie solaire,
- des moyens de stockage (10) d'énergie thermique,
- un premier circuit (12) de transport du premier fluide (8) caloporteur reliant les moyens de chauffage (6), les moyens de stockage (10) et la machine thermique (5) de production d'électricité ; ladite source froide (4) comprenant un deuxième circuit (46) de transport d'un deuxième fluide (48) caloporteur ;
**caractérisée en ce que** lesdits moyens de stockage (10) comprennent un matériau à changement d'état (18), la fusion du matériau à changement d'état (18) étant propre à stocker de la chaleur, et la solidification du matériau à changement d'état (18) étant propre à libérer la chaleur préalablement stockée.

2. installation selon la revendication 1, **caractérisée en ce que** lesdits moyens de stockage (10) comportent une cuve (14) et une pluralité de capsules (16) étanches disposées dans la cuve (14), ledit premier fluide (8) caloporteur circulant dans la cuve (14) entre les capsules (16) étanches, lesdites capsules étanches comprenant le matériau à changement d'état (18).

3. installation selon la revendication 1 ou 2, **caractérisée en ce que** la température de fusion du matériau à changement d'état (18) est comprise entre 100° Celsius et 130° Celsius.

4. installation selon l'une quelconque des revendications précédentes, **caractérisée en ce que** le matériau à changement d'état (18) est un matériau organique.

5. Installation selon la revendication 4, **caractérisée en ce que** le matériau organique (18) est un polyéthylène du type Polywax 2000™ de température de fusion voisine de 112° Celsius à 120° Celsius.

6. Installation selon l'une quelconque des revendications 1 à 3, **caractérisée en ce que** le matériau à changement d'état (18) est un matériau minéral.

7. Installation selon la revendication 6, **caractérisée en ce que** le matériau minéral (18) est le chlorure de magnésium hexahydraté de température de fusion voisine de 116° Celsius.

8. Installation selon l'une quelconque des revendications précédentes, **caractérisée en ce que** lesdits moyens de stockage (10) sont agencés dans le premier circuit (12) en parallèle des moyens de chauffage (6) et de la machine thermique (5).

9. Installation selon l'une quelconque des revendications précédentes, **caractérisée en ce que** la source chaude (2) comprend une boucle de régulation (42) et **en ce que** l'installation comporte des moyens de commande (44) à distance de ladite boucle de régulation (42).

10. installation selon l'une quelconque des revendications précédentes, **caractérisée en ce que** la source chaude (2) comprend une bâche (20) de stockage pour délester le premier circuit (12) de transport du premier fluide (8) caloporteur.

11. Installation selon l'une quelconque des revendications précédentes, **caractérisée en ce que** la source chaude (2) comprend un générateur d'énergie thermique, afin de garantir une production d'électricité permanente, dans le cas où les moyens de stockage (10) sont vides et l'énergie solaire insuffisante.

12. Installation selon l'une quelconque des revendications 1 à 10, **caractérisée en ce que** la source chaude (2) comprend un récupérateur d'énergie thermique, afin de garantir une production d'électricité permanente, dans le cas où les moyens de stockage (10) sont vides et l'énergie solaire insuffisante.

13. Installation selon l'une quelconque des revendications précédentes, **caractérisée en ce que** les moyens de chauffage (6) comportent des capteurs solaires à tubes sous vide, de température d'utilisation notamment comprise entre 80° Celsius et 150° Celsius.

14. Installation selon l'une quelconque des revendications précédentes, **caractérisée en ce que** la température maximale du premier fluide (8) caloporteur est égale à 150° Celsius.

15. Installation selon l'une quelconque des revendications précédentes, **caractérisée en ce que** la pression maximale dans le premier circuit (12) de transport est égale à 6 bars.

16. Installation selon l'une quelconque des revendications précédentes, **caractérisée en ce que** le premier circuit (12) de transport comprend deux sous-circuits (66, 68) indépendants, le premier sous-circuit (66) reliant les moyens de chauffage (6) aux moyens de stockage (10), le deuxième sous-circuit (68) reliant les moyens de stockage (10) à la machine thermique (5) de production d'électricité.

17. Installation selon l'une quelconque des revendications précédentes, ladite machine thermique (5) comprenant :
- un troisième circuit (52) de transport d'un fluide de service (54),
- une chaudière (56) pour faire passer le fluide de service (54) de l'état liquide à l'état gazeux, à partir de la source chaude (2),
- une turbine (58), fonctionnant à partir du fluide de service (54) à l'état gazeux, couplée à une génératrice d'électricité (60),
- un condenseur (62), pour faire passer ledit fluide de service (54) de l'état gazeux à l'état liquide, à partir de la source froide (4),
**caractérisée en ce que** la température maximale du fluide de service (54) dans la turbine (58) est égale à 100° Celsius.

18. Installation selon la revendication 17, **caractérisée en ce que** le fluide de service (54) est un fluide organique, notamment le butane.

19. Procédé de génération d'énergie électrique à partir d'énergie solaire comprenant :
- le chauffage d'un premier fluide caloporteur (8) à partir d'énergie solaire à l'aide de moyens de chauffage solaires (6),
- le transport du premier fluide caloporteur (8) dans un premier circuit (12) à partir des moyens de chauffage (6), vers des moyens de stockage (10) d'énergie thermique comprenant un matériau à changement d'état (18), et/ou vers une machine thermique (5) de production d'électricité,
- la génération d'énergie électrique à l'aide de la machine thermique (5) à partir de l'énergie thermique transportée par l'intermédiaire du premier fluide caloporteur (8),
- le stockage d'énergie thermique via la fusion du matériau à changement d'état (18) lorsque l'énergie thermique issue du chauffage du premier fluide (8) est supérieure à celle nécessaire à la génération d'énergie électrique, et
- le déstockage d'énergie thermique via la solidification du matériau à changement d'état (18) lorsque l'énergie thermique issue du chauffage du premier fluide (8) est inférieure à celle nécessaire à la génération d'énergie électrique.

20. Procédé selon la revendication 19, **caractérisé en ce qu'**il est mis en oeuvre dans une installation de génération d'énergie électrique selon l'une quelconque des revendications 1 à 18.
